Europäisches Patentamt

**European Patent Office**

Office européen des brevets

(19)

(11) Publication number: **0 069 172**
**A1**

(12)

# EUROPEAN PATENT APPLICATION

(21) Application number: **81302629.1**

(22) Date of filing: **12.06.81**

(51) Int. Cl.³: **F 24 D 11/02**
**F 25 D 21/12**

(43) Date of publication of application:
**12.01.83 Bulletin 83/2**

(84) Designated Contracting States:
**DE FR IT NL SE**

(71) Applicant: **THORN EMI DOMESTIC ELECTRICAL
APPLIANCES LIMITED
Thorn House Upper St. Martin's Lane
London WC2H 9ED(GB)**

(72) Inventor: **Bell, Geoffrey Ian
12, Nutwick Road
Denvilles Havant Hampshire(GB)**

(74) Representative: **Marsh, Robin Geoffrey et al,
Thorn EMI Patents Limited The Quadrangle Westmount
Centre Uxbridge Road
Hayes Middlesex, UB4 0HB(GB)**

(54) **Central heating systems.**

(57) A central heating system in which heat is extracted from
the environment by a heat pump (10) and transferred to a
liquid contained in a storage vessel (12) for distribution to
one or more heating devices (24). The heat pump (10)
includes an evaporator (16) which is defrosted by circulation
of defrosting agent, heat being transferred thereto from the
storage vessel.

FIG. 2

EP 0 069 172 A1

: 1 :

## CENTRAL HEATING SYSTEMS

This invention relates to central heating systems employing heat pumps.

It has been proposed that the efficiency of a central heating system can be improved by the use of a heat pump to extract heat from the surrounding air. It has been found, however, that much valuable energy is wasted in operating the heat pump itself; it requires frequent defrosting for example. Furthermore the heat demand throughout the year varies and so hitherto it has been necessary to use a large and therefore expensive heat pump which is operated for much of the time at less than full capacity.

It is an object of the present invention to provide an improved, more efficient, type of central heating system.

According to one aspect of the invention there is provided a central heating system comprising:-

(a) a vessel for storing a liquid at a temperature substantially above ambient temperature,

(b) a heat distribution apparatus for supplying heat to a desired location,

(c) ducts arranged to circulate a liquid between the vessel and apparatus so as to transfer heat stored in the vessel to the apparatus, and

(d) a heat pump including an evaporator for extracting heat from the environment and, connected in series therewith, a circuit for a refrigerant having a condenser arranged to transfer heat extracted by the evaporator, to liquid contained in said vessel,

the heat pump also including means for defrosting the evaporator including a heat exchanger forming part of a fluid filled circuit for conveying heat to the evaporator to effect its defrosting, the heat exchanger being located within said vessel so as to extract heat from the liquid contained therein.

The storage vessel may include an electrical heating element for supplementing the heat stored therein.

The condenser for the heat pump may be disposed within said vessel.

The circuit for the refrigerant may include a compressor disposed in an oil filled compartment located within the vessel, walls of the compartment being of a thermally conductive material.

The heat distribution apparatus may be a radiator comprising a tank, having thermally conductive sides, for containing liquid transferred thereto from the storage vessel, and thermally insulating walls surrounding the tank and spaced therefrom by an air passage, the walls having spaced apertures for permitting a convective air flow through the passage.

The passage may be provided with a baffle plate for regulating the extent of the air flow through the passage.

The radiator may include a fan located within or in the vicinity of the air passage for assisting air flow therethrough.

In order that the invention may be more readily understood and carried into effect specific embodiments thereof are now described by way of example only with reference to the accompanying drawings of which:-

Figure 1 is a graph showing the variation, throughout the year, in the demand for heat used in a central heating system i.e. for space heating and the supply of domestic hot water.

Figures 2 and 3 show schematic diagrams of two alternative central heating systems of the present invention,

Figures 4a, 4b and 4c show respective top, side and perspective views of one particular form of radiator which may be used in such a central heating system, and

Figure 5 shows the relative locations of the components constituting the central heating system of the present invention.

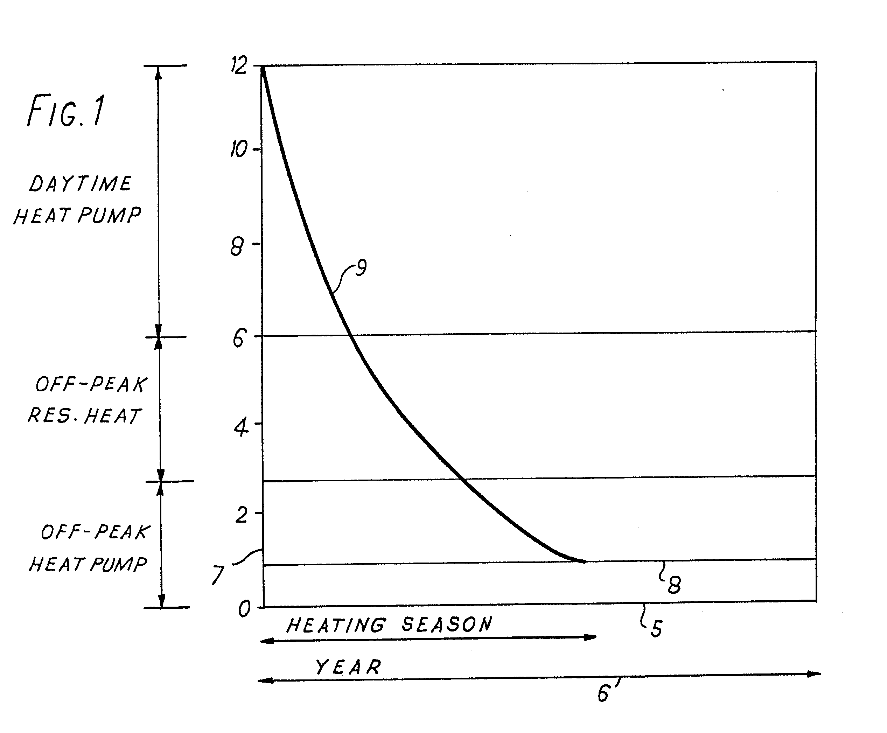

Figure 1 has two axes, each representing a different quantity; the horizontal scale 5 is the time scale and shown beneath it is an arrow 6 indicating the length which represents one year. Along the vertical axis 7 is marked the heat demand in terms of the average heat energy which must be dissipated during the day to provide sufficient heat energy for both heating and hot water requirements. A constant amount of heat is required throughout the year for the supply of hot water and this is indicated by the straight line 8 on the graph. The proportion of each year for which other heat energy levels are necessary is shown by the curve 9 and it can easily be seen that a demand in excess of 6KW represents only approximately 15% of the annual total.

It is proposed that the storage device which forms part of the central heating system should be constructed so as to allow half the maximum demand, in this case assumed to be a normal domestic load about 12KW, for say 17 hrs. to be stored during the heating period. If water is used as the storage medium, it would be preferable to use a tank holding about 2.5 cubic metres at a maximum temperature of 95°C.

If a heat pump with a nominal heat output rating equal to half the maximum (i.e. 6KW) is run during the entire period of seven hours when electricity is available at cheap rate, it produces sufficient heat to raise the storage tank temperature to about 75°C. Additional heat energy is stored, if required, in the upper levels of the tank by use of an electrical resistance heater which raises the temperature of the water to 95°C while the heat pump is again running on off peak electricity. By this means the storage device is supplied with enough heat to fill the entire storage capacity during the low demand period. If the storage tank, described above, is used it is possible to satisfy 85% of the year's heating requirements using cheap rate electricity.

On the few days each year that more than half the maximum amount of heat is required, heat is added to the storage tank by running the heat pump during the daytime on standard rate electricity.   In this way (see Figure 1) the maximum demand can be met.

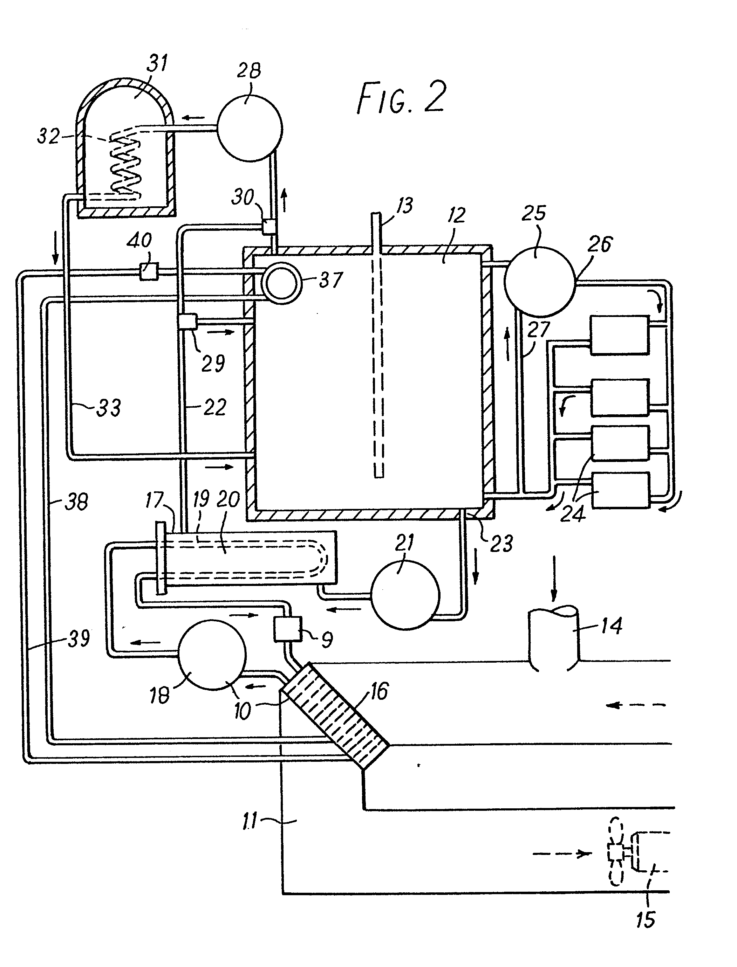

One example of the central heating system is shown schematically in Figure 2.   The system comprises a heat pump 10, connected to the outside air by an air duct 11, an insulated storage tank 12 and an electrical resistance heater 13.   Air is drawn in through the main duct 11 and possibly through a side duct 14, which is connected to air vents in the kitchen and bathroom, for example by a fan 15.   The air passes through an evaporator 16 which forms part of the heat pump 10 and heat is transferred from the air to the working fluid of the pump within the evaporator.   The working fluid passes through a compressor 18 where its temperature is again increased on into a heat exchanger 17 and then returned to the evaporator 16 via an expansion valve, 9.   The heat exchanger 17 consists of a condenser 19, through which the working fluid circulates, surrounded by an outer jacket 20 which is filled with water drawn by a water pump 21 from the storage tank 12.   The water which leaves the heat exchanger 17 along pipe 22 has been heated to a maximum temperature of about $75^{\circ}C$ and when it reaches the storage tank 12 the temperature can if necessary be increased further by the electrical resistance heater 13, i.e. if the heat required for the following day is more than can be produced by the heat pump alone during the off-peak hours.

The water in the storage tank 12 has a tendency to settle with a temperature gradient existing throughout its height with the hottest water at the top.   For this reason the outlet 23 to the heat exchanger is at the bottom of the tank where the water is coolest and similarly water which is to be circulated around a radiator system 24 is drawn off by a pump 25 from the top of the tank 12 where the temperature is highest and returned after circulation and consequent cooling to the bottom of the tank 12 close to the outlet to the heat exchanger 23.   This has the effect of preventing mixing of the layers at different temperatures which would cause the maximum temperature of the water to drop.

A mixer valve 26 is included in the radiator system so that some of the cool water which has lost heat during circulation can be re-circulated via the pipe 27, enabling the temperature of the circulating water to be adjusted according to need.

The system can also be used to provide hot water for domestic use; a water pump 28 draws hot water from the top of the tank 12 and to this may be added water which comes direct from the heat exchanger 17 via the pipe 22. The flow of this hot water is controlled by priority valves 29 and 30. The water passes through the domestic hot water tank 31 in a pipe 32 which forms a second heat exchanger and heat is transferred to the water which will be piped to kitchen and bathroom.

Once the water has passed through the domestic hot water tank 31 it is returned to the storage tank 12 via the pipe 33 which has an inlet at the bottom of the storage tank so that the different temperature layers within the tank 12 remain undisturbed.

The rate of flow and temperature of the water in all the pipes is controlled by a microprocessor unit (not shown). In use of the system heat pump 10 and, if necessary, the electrical resistance heater 13 are switched on and allowed to run until sufficient heat to satisfy the following day's needs has been accumulated in the storage tank 12. If it is exceptionally cold and heat beyond the capacity of the tank is required, the heat pump 10 continues to run during the daytime as well. The amount and temperature of the water which flows through the radiator system 24 and through the hot water tank 31 is controlled by the mixer valve 26 and the priority valves 29 and 30 respectively, and these valves are themselves regulated by the microprocessor.

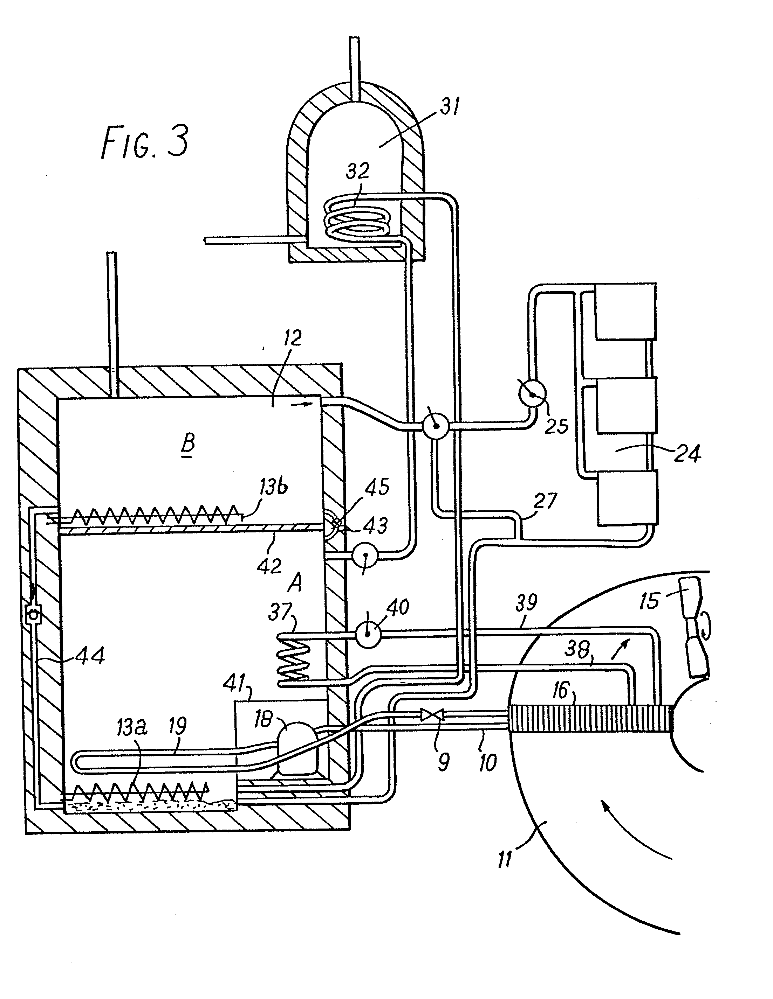

The repeated evporation and condensation of the working fluid within the heat pump may lead to the frosting over of the evaporator which makes the extraction of heat from the air inefficient. It is therefore proposed that a defrosting device should be included as part of the system. A heat exchanger coil 37 is placed inside the storage tank 12 and through this coil is circulated a mixture of water and antifreeze and this arrangement is found to be particularly efficient. The warm mixture is carried to the heat pump 10 via a pipe 38 and passes through fins on the evaporator 16 in pipes which are parallel to those carrying the working fluid. The warmth of the mixture causes the evaporator 16 to defrost and the cold mixture is then returned to the heat exchanger coil 37 via a pipe 39. Since the defrosting operation is not continuous a valve 40 is included in the circuit so that the defrosting mechanism can be switched on and off where necessary and is not dependent on simultaneous operation of the heat pump compressor 18. Figure 3 shows an alternative example of the present invention each component in the system having the reference numeral used in Figure 2, the heat exchanger, pump and ducts for the defrosting circuit again being shown at 37, 40, 38 and 39 respectively. In this example of the invention, the condenser tube 19 is accommodated within the storage tank 12 thereby obviating the need for a separate heat exchanger (shown at 20 in Figure 2) and also reducing the length of piping outside the tank through which heat could be lost. In addition, the compressor 18 for the heat pump is accommodated within an oil filled compartment 41, located within the storage tank 12. The inwardly facing walls of the compartment 41 are formed of a thin, heat conducting material, a metal or plastics material for example, so that frictional heat and motor losses generated in operation of the compressor 18 is transferred to water stored in the tank, thereby supplementing the heat supplied thereto via the condenser 19. It is also found that by cooling the compressor 18 in this manner the efficiency of operation of the heat pump is increased. Moreover, the surrounding oil tends to damp noise generated in operation of the compressor, this being particularly important during night use.

In this example of the invention the storage tank 12 has two sections, an upper section A and a relatively large, lower section B, separated from the upper section by an insulating wall member 42, the two sections being linked by a duct 43 and a non return line 44, located within the insulating walls of the tank. The duct 43 has a shut-off valve 45 which may be used to isolate the two sections.

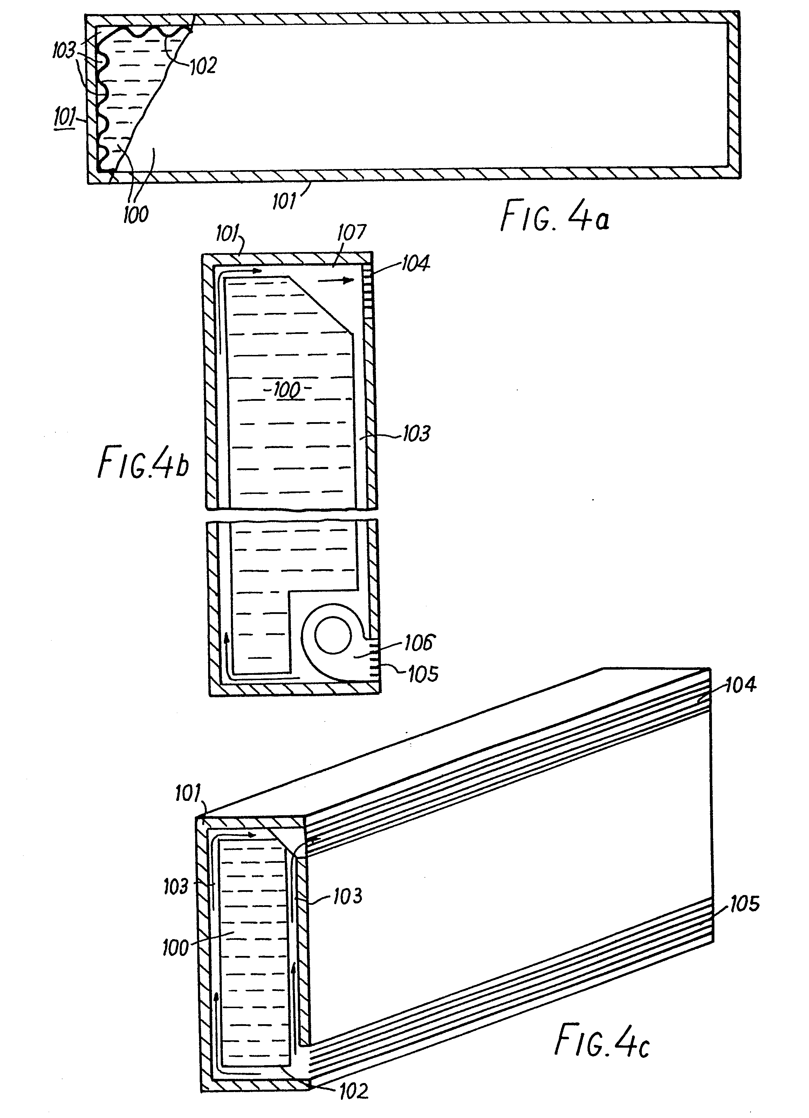

Water contained in the lower section of the tank is normally heated solely by the heat pump and is used to supply· heat to the domestic hot water tank shown at 31. During summer use, when demand for heat is low, the radiator system 24 would not normally be in use and so the valve 45 remains closed. During relatively cold periods, however, valve 45 is opened so that water, heated by the heat pump may be pumped around the radiator system 24 to convey heat thereto. During winter months, when the demand for heat is at a peak an electrical resistance heater 13b, located in the upper section, B, of the tank is used to supplement the heat generated by the heat pump prior to supplying water to the radiator system. This arrangement is found to be particularly efficient since only a relatively small volume of water, contained in section B of the tank, is heated by the electrical resistance heater 13b. An additional heating element 13a may optionally be included in the lower section A of the tank to provide an extra "standby" source of heat should either of the two other sources fail. The radiator system 24 may comprise water radiators or alternatively convective, water storage, heaters. Figures 4a, 4b and 4c show respective top, side and perspective views of a water storage heater used in one example of the present invention.

The heater comprises a tank 100 for containing water supplied thereto from the storage tank 12. The heater has thermally insulating outer walls 101 which surround the sides 102 of the tank 100 and are spaced therefrom by an air passage 103. The sides of the tank 101 are formed of a thermally conductive material, a metal for example, and may be corrugated so as to increase their surface area and thereby increase the heat transferred to the air passage from the water. The air passage has spaced upper and lower apertures shown at 104 and 105 in Figure 4b and 4c which permit a convective flow of air through the passage (in the direction of the arrows X) so as to convey heat to the surroundings. A fan 106 located close to the lower aperture 105 may be incorporated in which case the convective air flow is reversed and warm air is discharged at floor level. The flow may be further regulated by a baffle plate 107 located adjacent to the upper aperture 105. The position of the baffle plate may be thermostatically controlled. Convector heaters and fan heaters of the above-described kind may be particularly suitable for heating relatively small rooms in flats or houses, for example.

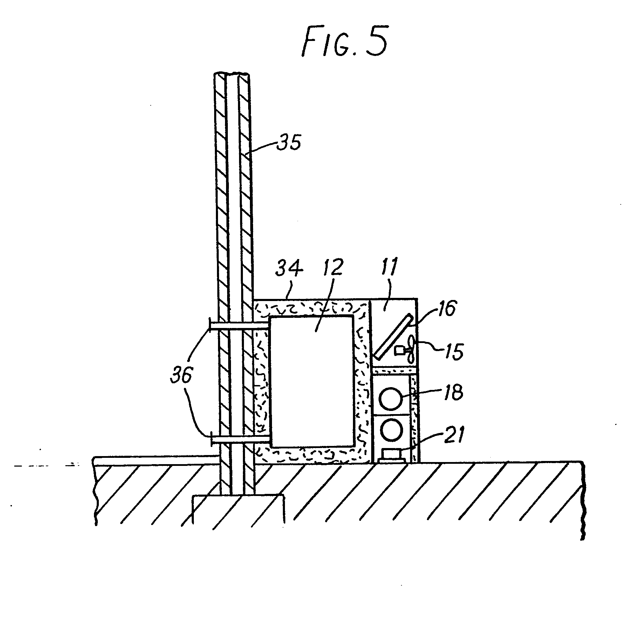

Figure 5 shows one arrangement of the central heating system within an insulated housing 34 constructed adjacent to the outside wall 35 of a house. Within the housing 34 is the storage tank 12, an air duct 11, the evaporator 16 and the compressor and condenser 18 which forms the heat pump, a fan 15 to draw the air over the evaporator and a water pump 21 which circulates water from the storage tank 12 to the radiator and hot water systems inside the building via the pipes 36.

The arrangement of the apparatus in a housing outside the building means that the bulky apparatus need not be accommodated within the limited space inside and makes access to the heat source, the outside air, easy.

What we claim is:-

1.      A central heating system comprising:-

(a) a vessel (12) for storing a liquid at a temperature substantially above ambient temperature,

(b) a heat distribution apparatus (24) for supplying heat to a desired location,

(c) ducts arranged to circulate a liquid between the vessel and apparatus so as to transfer heat stored in the vessel (12) to the apparatus (24), and

(d) a heat pump (10) including an evaporator (16) for extracting heat from the environment and, connected in series therewith, a circuit for a refrigerant having a condenser (19) arranged to transfer heat extracted by the evaporator, to liquid contained in said vessel,

characterised in that the heat pump also includes means for defrosting the evaporator including a heat exchanger (37) forming part of a fluid filled circuit for conveying heat to the evaporator to effect its defrosting, the heat exchanger being located within said vessel so as to extract heat from the liquid contained therein.

2.      A central heating system according to Claim 1 wherein the storage vessel includes an electrical heating element for supplementing heat stored therein.

3.      A central heating system according to Claims 1 or 2 wherein the said condenser is disposed within the storage vessel.

4.      A central heating system according to Claims 1 to 3 wherein the circuit for the refrigator includes a compressor disposed within an oil filled compartment disposed within the vessel, the walls of the compartment being of a thermally conductive material.

5.      A central heating system according to Claims 1 to 4 wherein the heat distribution apparatus is a radiator comprising a tank, having thermally conductive sides, for containing liquid transferred thereto from the storage vessel, and thermally insulating walls surrounding the tank and spaced therefrom by an air passage, the walls having spaced apertures for permitting a convective air flow through the passage.

6.     A central heating system according to Claim 5 wherein the radiator comprises a baffle plate for regulating the extent of the air flow through the passage.

7.     A central heating system according to Claims 5 or 6 wherein the radiator includes a fan located within or in the vicinity of the air passage for assisting a flow of air therethrough.

8.     A central heating system substantially as hereinbefore described by reference to and as illustrated in Figures 2 to 5 of the accompanying drawings.

FIG.1

0069172

F*IG*. 2

*Fig. 3*

0069172

FIG. 4a

FIG.4b

FIG.4c

0069172

FIG.5

## European Patent Office

## EUROPEAN SEARCH REPORT

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>BE - A - 565 391</u> (LIGHTFOOT REFRIGERATION COMP.)<br><br>* claims 1,4,5,8 * | 1,2 | F 24 D 11/02<br>F 25 D 21/12 |
| A | <u>FR - A - 2 297 384</u> (GROSS)<br><br>* claims 1,6,7,8,12 * | 1 | |
| A | <u>DE - A - 2 604 942</u> (SCHMIDT)<br><br>* page 6, lines 14-17 * | 4 | **TECHNICAL FIELDS SEARCHED (Int.Cl. ³)** |
| A | <u>DE - A - 2 358 831</u> (GROSS)<br><br>* the whole document * | 1,2,3 | F 24 D<br>F 25 D |
| A | <u>GB - A - 1 396 292</u> (RANDELL)<br><br>* figures 5,8,9,10 * | 5,6,7 | |
| X,E | <u>GB - A - 2 064 755</u> (THORN DOMESTIC APPLIANCES LTD.)<br><br>* the whole document *<br><br>------------ | 1-8 | **CATEGORY OF CITED DOCUMENTS**<br><br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons<br><br>&: member of the same patent family, corresponding document |

| The present search report has been drawn up for all claims | | |
|---|---|---|
| Place of search<br>The Hague | Date of completion of the search<br>24-02-1982 | Examiner<br>VAN GESTEL |

EPO Form 1503.1 06.78